# EUROPÄISCHE PATENTSCHRIFT

(11) **EP 1 943 328 B1**
(45) Veröffentlichungstag und Bekanntmachung des Hinweises auf die Patenterteilung: **25.02.2015**
(21) Anmeldenummer: 06753687.0
(22) Anmeldetag: 17.05.2006
(51) Int. Cl.: C12C 5/00, C12H 1/14, C12C 11/00

(54) **VERBESSERTE BIERHERSTELLUNG**
IMPROVED BEER PRODUCTION
PRODUCTION DE BIERE AMELIOREE

(30) Priorität: 26.10.2005 DE 102005052210
(43) Veröffentlichungstag der Anmeldung: 16.07.2008
(73) Patentinhaber: Südzucker AG Mannheim/Ochsenfurt, 68165 Mannheim (DE)
(72) Erfinder: DÖRR, Tillmann, 67591 Hohen-Sülzen (DE); GUDERJAHN, Lutz, 67591 Offstein (DE); KOWALCZYK, Jörg, 67304 Eisenberg/Steinborn (DE); PAHL, Roland, 13351 Berlin (DE); SCHNEIDER, Jan, 32694 Schwelentrup (DE)
(74) Vertreter: Schwahn, Hartmut
(86) Internationale Anmeldenummer: PCT/EP2006/004683
(87) Internationale Veröffentlichungsnummer: WO 2007/048450

(56) Entgegenhaltungen:
- WO-A-2005/061690
- DE-A1- 1 642 698
- DE-A1- 2 344 252
- DE-A1- 2 729 961
- DE-A1- 10 361 313
- GB-A- 1 179 482
- US-A- 4 659 662
- US-A1- 2005 019 447
- DATABASE WPI Section Ch, Week 199142 Derwent Publications Ltd., London, GB; Class D16, AN 1991-303526 XP002393030 & CN 1 049 028 A (LIGHT IND TRAINING) 6. Februar 1991 (1991-02-06)
- PATENT ABSTRACTS OF JAPAN Bd. 1997, Nr. 08, 29. August 1997 (1997-08-29) & JP 09 094085 A (SAPPORO BREWERIES LTD), 8. April 1997 (1997-04-08)

## Beschreibung

Die vorliegende Erfindung betrifft Mittel und Verfahren zur verbesserten Herstellung von Bier und Biermischgetränken.

Diacetyl (2,3-Butandion) und andere vicinale Diketorie und Vorstufen davon werden von der Hefe während der Gärung als so genannte Gärnebenprodukte gebildet. Diacetyl wird zu den Jungbukettstoffen gezählt, die das Aroma des Bieres im unfertigen Stadium bestimmen. Diacetyl ist in der Lebensmittelindustrie als künstliches Butteraroma bekannt. Es verleiht dem Bier beim Überschreiten des Geschmacksschwellenwertes von etwa 0,1 mg/l (0,1 ppm) einen unreinen, süßlichen Geschmack (Fehlaroma), der in stärkerer Konzentration das in der Regel im Bier unerwünschte Butteraroma ausmacht.

Die eingesetzte Hefe bildet während der Gärung als eines der zentralen Produkte der Energiestoffwechsels Pyruvat. Dabei werden auch Acetohydroxysäuren gebildet, die von der Hefe an das umgebende Medium abgegeben werden. Aus diesen Acetohydroxysäuren werden außerhalb der Hefezelle durch oxidative Decarboxylierung die vicinalen Diketone Pentandion und Diacetyl gebildet. Dieser Vorgang passiert spontan und ohne Beteiligung der Hefe.

Diacetyl ist ein Intermediärprodukt bei der Gärung. Der Abbau des Diacetyls erfolgt durch die Hefe, die das Diacetyl aufnimmt und als Wasserstoffakzeptor nutzt. Das Diacetyl wird von der Hefe über die Zwischenstufe Acetoin zu Butandiol reduziert, eine Substanz, die aufgrund eines sehr hohen Geschmacksschwellenwertes das Bieraroma nicht mehr beeinflusst.

Der Gärprozess zur Herstellung von Bier erfolgt in der Regel in zwei Stufen: Die Hauptgärung wird durch den Zusatz der Mikroorganismen, insbesondere Hefen, eingeleitet. Dabei wird das Gärsubstrat, der so genannte Extrakt, im Wesentlichen der alkoholischen Gärung unterzogen. Die Hauptgärung findet in der Regel in der Wärme (ca. 15 bis 22 °C) oder unter Kühlung (ca. 5 bis 10 °C) statt. Die Hauptgärung ist eigentlich dann abgeschlossen, wenn der enthaltene Extrakt vollständig vergoren ist. Dieser Zeitpunkt wird als Endpunkt der Extraktvergärung bezeichnet. Für den Abbau der nachteiligen Gärnebenprodukte, den vicinalen Diketonen, muss der Hauptgärvorgang noch nach Erreichen des Endpunkts solange aufrechterhalten werden, bis der Gesamtdiacetylgehalt unter den Geschmacksschwellenwert (Wahrnehmungsschwelle) sinkt. Ist der Schwellenwert erreicht, wird die Hauptgärung, abgeschlossen, das erhaltene Jungbier zurückgekühlt und einer wochenlangen Nachgärung in der Kälte (ca. 0 bis -1 °C) unterzogen, wobei das Bier geklärt wird. Der Prozess der Nachgärung wird auch als Reifung bezeichnet.

Der Richtwert für den Gesamtdiacetylgehalt (vicinale Diketone und Vorstufen) für ein ausgereiftes Bier liegt in der Regel bei 0,1 mg/l. Dieser Wert wird daher oft in Brauereien als bestimmender Parameter herangezogen, um den Endpunkt der Hauptgärung zu bestimmen. In der Regel beträgt dieser zusätzliche Zeitraum nach dem Endpunkt der Extraktgärung noch 1 bis 4 Tage.

Nachteilig bei bekannten Herstellverfahren für Bier oder Biermischgetränke ist, dass die Hauptgärung oft länger als für die Vergärung des Extraktes notwendig durchgeführt werden muss. Angesichts des Umstandes, dass die Hauptgärung oft mit technisch erhöhter (ca. 15 bis 22 °C) oder erniedrigter Temperatur (ca. 5 bis 10 °C) durchgeführt wird, ist die längere Hauptgärung mit einem höheren Energieaufwand verbunden. Außerdem wird der Gärbottich länger für einen neuen Gäransatz blockiert. Meist ist aber gerade die Verfügbarkeit der Gärbottiche der limitierende Faktor für die Kapazität einer Brauerei. Es wäre wünschenswert, die Hauptgärung bereits zu einem früheren Zeitpunkt abzuschließen, an dem der Extrakt vollständig oder weitestgehend vergoren ist. Um ein geschmacklich akzeptables Bier zu erhalten, müsste aber bereits bis zu diesem frühen Zeitpunkt der Anteil an geschmacksbeeinträchtigenden Nebenprodukten wie der Gesamtdiacetylgehalt unter die Wahrnehmungsschwelle gesunken sein. Es besteht daher der Bedarf an einem verbesserten Herstellverfahren für Bier oder Biermischgetränke worin vor allem die Hauptgärung verkürzt ist.

DE 103 61 313 A1 und WO 2005/061690 A offenbaren ein Verfahren zur Herstellung von Bier, wobei kristalline Palatinose in die Würzepfanne gegeben wird; der Stammwürzegehalt beträgt 5% und das Verhältnis von Palatinose zu Extrakt beträgt 1:4. DE 23 44 525 A1 offenbart ein Verfahren zur Herstellung eines bierähnlichen Getränkes unter Verwendung von Gerstenmalz, wobei eine Palatinoselösung vor dem Ausschlagen in die Würzepfanne gegeben wird; der Palatinosegehalt der Würze liegt bei ca. 6 g pro 100 ml.

US 4,659,622 offenbart ein Verfahren zur Herstellung von Bier, welches eine Verkürzung der Gärdauer sowie eine Verminderung des Diacetylgehalts im Bier gestattet, indem Gärhefe eingesetzt wird, die in oder an semipermeablem Membranmaterial immobilisiert ist, und die Fermentation batchweise erfolgt.

Das der vorliegenden Erfindung zugrundeliegende technische Problem besteht im Wesentlichen in der Bereitstellung von Mitteln und Verfahren zur verbesserten Herstellung von Bier, worin der Gärverlauf, vor allem die Hauptgärung, verkürzt ist und geschmacklich einwandfreies Bier erhalten werden kann.

Das zugrundeliegende Problem wird gelöst durch die Verwendung von Isomaltulose oder Isomaltulose-haltigen Zusammensetzungen in einem gattungsgemäßen Verfahren zur Herstellung von Bier, wobei aus Brauwasser, gegebenenfalls Hopfen und mindestens einer Kohlenhydratquelle in einem ersten Schritt (a) einer Würze bereitet wird, und in einem nachfolgenden Schritt (b) die Würze mikrobiell vergoren wird, wobei Schritt (b) die Unterschritte (b1): Hauptgärung und (b2): Zurückkühlen des Jungbieres und Nachgärung/Reifung enthält. Das erfindungsgemäße Verfahren ist dadurch gekennzeichnet, dass in der Würze als die mindestens eine Kohlenhydratquelle Isomaltulose oder ein Isomaltulose-haltiges Gemisch enthalten ist und in Schritt (c1) die Hauptgärung abgeschlossen wird, sobald der vergärbare Extraktanteil in der Würze vollständig oder weitgehend vergoren ist. Der Endpunkt der Extraktgärung wird besonders dadurch erkennbar, dass der Extraktanteil im weiteren Verlauf der Gärung (Extraktverlauf) nicht mehr weiter abnimmt. Bevorzugt sind zu diesem Zeitpunkt 70 % oder mehr, besonders mindestens 75 %, des Extrakts vergoren. Es versteht sich, dass der Endvergärungsgrad von der verwendeten Hefe abhängt. Erfindungsgemäß enthält die Kohlenhydratkomponente Isomaltulose oder ein Isomaltulose-haltiges Gemisch in einem Anteil von 0,3 bis 3 g pro 100 ml Würze.

Als Hauptbestandteil der Kohlenhydratkomponente zur Bereitung der Würze wird vorzugsweise vermälztes Getreide (Malz) und/oder unvermälztes Getreide und/oder Getreide-Rohfrucht eingesetzt. Vorzugsweise wird etwa 10 bis 15 g/100 ml Malz oder/und unvermälztes Getreide oder Getreide-Rohfrucht eingesetzt. Vorzugsweise beträgt der Anteil der Isomaltulose in der fertigen Würze von 0,3 g/100 ml bis 2 g/100 ml, besonders bevorzugt von 0,5 g/100 ml bis 1,5 g/100 ml, weiter bevorzugt von 0,5 g/100 ml bis 1,0 g/100 ml. Alternativ kann der Anteil in der Isomaltulose in der Würze auch über das Verhältnis zu dem Hauptbestandteil der Kohlenhydratkomponente, insbesondere Malz, bestimmt werden; bevorzugt beträgt das Verhältnis der Isomaltulose zu der weiteren Kohlenhydratkomponente von etwa 1:20 bis etwa 1:5, vorzugsweise von etwa 1:16 bis etwa 1:8. Vorzugsweise wird Isomaltulose einer herkömmlichen Würze zugesetzt.

Die Erfindung sieht also vor, durch Zusatz von Isomaltulose oder Ersatz zumindest eines Teils der Kohlenhydratkomponente durch Isomaltulose bei einer herkömmlichen Bierwürze in gattungsgemäßen Bierherstellverfahren die Hauptgärung bereits bei Erreichen des Endpunkts der Extraktgärung abzuschließen. Überraschenderweise zeigt sich, dass bereits zu diesem Zeitpunkt der Anteil vicinalen Diketonen unterhalb des Geschmacksschwellenwertes von etwa 0,1 mg/l (0,1 ppm) gesunken ist. Überraschenderweise kann durch den Einsatz von Isomaltulose als eine Kohlenhydratkomponente einer Würze erreicht werden, dass bereits nach einer kurzen Hauptgärung, ein durch Gärnebenprodukte geschmacklich unbeeinträchtigtes Jungbier erhalten werden kann, das viel früher einer gattungsgemäß anschließenden Nachgärung beziehungsweise Reifung unterzogen werden kann. Dadurch wird der gesamte Brauprozess in der Regel um mehrere Tage verkürzt, was eine erhebliche Zeit- und Kostenersparnis ermöglicht und eine Vergrößerung der Braukapazität erlaubt.

Im Einzelnen zeigt sich überraschend, dass bereits die Zugabe einer geringen Menge von Isomaltulose, vorzugsweise 0,3 g/100ml bis 3 g/100ml zu einer deutlich verminderten Bildung von vicinalen Diketonen, insbesondere gemessen über den Diacetylgehalt, bei der Hauptgärung führt. Dieser vorteilhafte Effekt ist unter Verwendung gängiger Bierhefen festzustellen. Der Effekt ist auch unabhängig vom verwendeten Malz. Im Mittel wird in erfindungsgemäßen Isomaltulose-haltigen Würzen etwa 30 % weniger Diacetyl gebildet als in denselben Würzen ohne Isomaltulose (Vergleichswürzen). Es wurde gefunden, dass sowohl der Maximalwert der gebildeten Diacetylmenge, als auch die Diacetylmenge am erfindungsgemäß letzten Tag der Gärung (Endpunkt der Extraktvergärung) in einer herkömmlichen Würze ohne Isomaltulose (Vergleichswürze) deutlich höher lag als in einer Würze mit einem erfindungsgemäßen Anteil an Isomaltulose.

Weiter zeigt sich überraschend, dass die Verminderung der Diacetylbildung in Gegenwart von Isomaltulose dann geringer ausfällt, wenn der Isomaltulosegehalt in der Würze über einem bestimmten Grenzwert liegt. Während die maximale Diacetylreduzierung bei einem Isomaltulosegehalt von etwa 0,5 g/100 ml bis etwa 1,5 g/100 ml in der Würze auftritt, ist bei einem Isomaltulosegehalt oberhalb von etwa 2 g/100 ml in der Würze die Diacetylbildung nur noch so wenig reduziert, dass das der Erfindung zugrunde liegende technische Problem in vielen Fällen nicht mehr zweckmäßig gelöst wird. Isomaltulosegehalte von deutlich mehr als 2 g/100 ml in der Würze sind somit nicht mehr Gegenstand der vorliegenden erfindungsgemäßen Lehre.

Isomaltulose- (6-O-α -D-Glucopyranosylfructose), bekannt unter der Bezeichnung Palatinose™, ist eine Disaccharid-Ketose, die natürlicherweise vorkommt, beispielsweise in Honig. Isomaltulose kann gemäß DE 44 14 185 C1 durch enzymatische Umlagerung, beispielsweise unter Verwendung immobilisierter Bakterienzellen insbesondere Protaminobacter rubrum, Erwinia rhapontici und Serratia plymuthica oder einer daraus isolierten Saccharose-Isomerase großtechnisch aus Saccharose hergestellt werden.

Bei einem "Isomaltulose-haltigen Gemisch" handelt es sich um eine Kombination von Isomaltulose mit mindestens einem weiteren Kohlenhydrat, besonders Fruktose, Glukose, Saccharose, Trehalulose, Leucrose, Turanose, Tagatose, Isomaltose, Isomelizitose, Oligosacchariden mit einem Polymerisationsgrad von 3 oder 4 oder mehr oder Gemischen davon. In einer Variante enthält das Gemisch Isomaltulose und Fruktose, in einer weiteren Variante enthält das Gemisch Isomaltulose und Glukose, in einer weiteren Variante enthält das Gemisch Isomaltulose und Saccharose, in einer weiteren Variante enthält das Gemisch Isomaltulose und Trehalulose, in einer weiteren Variante enthält das Gemisch Isomaltulose und Leucrose, in einer weiteren Variante enthält das Gemisch Isomaltulose und Tagatose, in einer weiteren Variante enthält das Gemisch Isomaltulose und Isomaltose, in einer weiteren Variante enthält das Gemisch Isomaltulose und Turanose, in einer weiteren Variante enthält das Gemisch Isomaltulose und Isomelizitose, in einer weiteren Variante enthält das Gemisch Isomaltulose und Oligosaccharide mit einem Polymerisationsgrad von 3 oder 4 oder mehr. In bevorzugter Ausführung ist das Isomaltulose-haltige Gemisch das Saccharose-Isomerisierungsprodukt, das mittels Transglucosidierung der Saccharose, vorzugsweise unter Verwendung toter oder lebender Zellen von Protaminobacter rubrum oder daraus hergestellter Enzymextrakte, gewonnen wird. Erfindungsgemäß eingesetzte Isomaltulosehaltige Gemische enthalten in einer besonders bevorzugten Ausgestaltung der Erfindung etwa 79-85 % Isomaltulose, 8-10 % Trehalulose, 0,5-2 % Saccharose, 1-1,5 % Isomaltose, Oligosaccharide, 2,5-3,5 % Fructose und 2,0-2,5 % Glucose oder bestehen daraus, wobei sich diese Angaben auf die Gesamttrockensubstanzgewicht beziehen.

Unter einer "Würze" wird die von unlöslichen Bestandteilen (Treber, Trubstoffe) befreite extrakthaltige wässrige Lösung , die aus einer Kohlenhydratquelle, beispielsweise Malz, verstanden, die mit Wasser vorzugsweise versetzt und gekocht wird. Nach dem Kochen mit Hopfen wird die so genannte Ausschlag-Würze erhalten. Nach Abkühlen liegt die gekochte Würze als Anstellwürze vor. Die Würze wird vorzugsweise mittels Maischen, Abläutern, Würze-Kochen und Würze-Behandlung hergestellt. Die Herstellung der Würze dient besonders dem Ziel, die zunächst ungelösten und unvergärbaren Bestandteile der Kohlenhydratquelle, insbesondere von Malz, in lösliche vergärbare Stoffe umzuwandeln, die verbleibenden festen Bestandteile abzutrennen und gegebenenfalls schließlich Gewürz, d.h. den Hopfen-Extrakt, zuzugeben.

Beim Maischen wird vorzugsweise zunächst die geschrotete Kohlenhydratquelle, insbesondere Malz, mit dem Brauwasser vermischt. Anschließend erfolgt vorzugsweise in dem so genannten Maischverfahren, in einem spezifischen Temperatur-Zeit-Programm, eine gezielte enzymatische Umwandlung von Inhaltsstoffen der Kohlenhydratquelle, wobei der wichtigste Prozess der vollständige Abbau von Stärke zu vergärbaren Zuckern wie Glukose, Maltose oder Maltotriose und nicht vergärbaren Dextrinen ist. Das Temperatur-Optimum der Maltose-Bildung liegt bei 60°C-65°C, das der Dextrinbildung bei 70°C-75°C. Die Temperatur bestimmt den Endvergärungsgrad der Würze je nach Biertyp. Nach dem Läutern und Absüßen der Treber mit heißem Brauwasser (78°C) wird die Würze vorzugsweise 60 min bis 100 min vorzugsweise unter Zugabe von Hopfen gekocht, wobei, je nach herzustellendem Biertyp, vorzugsweise etwa 150 bis 500 g/hl Hopfen zugegeben werden. Durch Verdampfen von vorzugsweise etwa 6-10 % der Ausgangsmenge wird der Stammwürze-Gehalt eingestellt. Beim Kochen erfolgt zudem eine Keimfreimachung, es kommt zur Koagulation von Eiweißstoffen, Hopfenbitterstoffe werden isomerisiert und Aromastoffe werden gebildet und teilweise auch verdampft. Die gekochte und gehopfte Würze wird anschließend vorzugsweise im Whirlpool und/oder durch Filtration von Trubstoffen befreit. Nach dem Kühlen der Würze, die üblicherweise im Plattenwärmetauschern erfolgt, wird der Kühltrub vorzugsweise partiell entfernt und es erfolgt eine intensive Belüftung zur Versorgung der zur Gärung eingesetzten Mikroorganismen mit Sauerstoff. Unmittelbar darauf wird die Würze vorzugsweise mit mindestens einem geeigneten gärkräftigen Mikroorganismus, herkömmliche Brauhefe versetzt (Anstellen). Da die zur Vergärung eingesetzte Würze unterschiedliche Kohlenhydratquellen enthalten kann, lassen sich unter Verwendung des erfindungsgemäßen Verfahrens auch helle oder dunkle mikrobiologisch stabilisierte Biere herstellen.

Erfindungsgemäß bevorzugt wird ein Teil des Extraktes der Würze durch Isomaltulose ersetzt. So wird gegebenenfalls der Anteil an metabolisierbaren Kohlenhydraten in der Würze reduziert, so dass vorzugsweise außerdem der Alkoholgehalt des hergestellten Getränkes gegenüber dem eines normalen Bieres herabgesetzt wird. Der Alkoholgehalt der erfindungsgemäß hergestellten Biere kann gegebenenfalls unter Verwendung von Alkoholentzugsverfahren weiter abgesenkt werden. Unter einem "alkoholfreien Bier" wird ein Bier mit einem Alkoholgehalt von unter 0,5 Vol.-% verstanden, das vorzugsweise etwa 7 bis 8 Vol.-% Stammwürze aufweist. Unter einem "alkoholarmen Bier" wird erfindungsgemäß ein Bier verstanden, das einen Alkoholgehalt von weniger als 5 Vol.-%, insbesondere weniger als 4 Vol.-% aufweist.

Unter einer "Kohlenhydratquelle" werden alle verwendbaren Kohlenhydrate enthaltenden Materialien wie Getreideprodukte verstanden, bei denen die Kohlenhydrate zumindest teilweise bei der Herstellung der Würze in vergärbare lösliche Zucker wie Glukose, Maltose oder Maltotriose überführt werden können (Verzuckerung), die dann bei der Gärung von Mikroorganismen, insbesondere den Brauhefen, als Kohlenstoffquelle genutzt werden. In bevorzugter Ausführungsform der Erfindung handelt es sich bei der eingesetzten Kohlenhydratquelle um vermälztes Getreide, Rohfrucht oder ein Gemisch davon.

Vermälztes Getreide sind vorzugsweise Körner und Samen von Gerste, Weizen, Roggen, Hafer, Hirse, Triticale, Reis, Sorghum und/oder Mais, die einem Malzherstellungsverfahren unterzogen wurden. Rohfrucht sind vorzugsweise Körner und Samen von Gerste, Weizen, Roggen, Hafer, Hirse, Sorghum Triticale, Reis und/oder Mais, die zwar verschrotet wurden, jedoch nicht vermälzt wurden.

Vorzugsweise werden die Ausgangsmaterialien vor der Vergärung verzuckert. Dazu werden die malzeigenen hydrolytisch wirkenden Enzyme wie Amylasen, Maltasen etc., die die Stärke in nicht vergärbare Dextrine und vergärbare Glukose, Maltose und Maltotriose überführen, genutzt. Bei der Malzbereitung lässt man die geweichten Cerealien vorzugsweise bei 12°C bis 18°C keimen und unterbricht den Keimprozess, sobald die Enzymbildung und Lösungsvorgänge das gewünschte Maß erreicht haben. Dies erfolgt bevorzugt durch Anwendung erhöhter Temperaturen bei großem Luftdurchsatz. Durch Vortrocknen bei vorzugsweise 40 bis 50°C (Schwelken) kann der Wassergehalt von über 50% auf 10 bis 12% gesenkt werden. Danach kann die Temperatur auf vorzugsweise etwa 80 bis 85°C angehoben werden, um das Malz auf einen Wassergehalt von vorzugsweise etwa 4 bis 5% zu bringen. Dieser Vorgang wird als Darren bezeichnet.

Bevorzugt wird zum Vergären ein einziger oder mehrere der Mikroorganismen, ausgewählt aus einem untergärigen Saccharomyces cerevisiae-Stamm, einem obergärigen Saccharomyces cerevisiae-Stamm, Saccharomyces carlsbergensis, Saccharomyces diastaticus und Schizosaccharomyces pombe, verwendet.

Bevorzugt wird unter Verwendung des erfindungsgemäßen Verfahrens mikrobiologisch stabilisiertes obergäriges oder untergäriges Bier hergestellt. Untergäriges Bier wird bei einer Untergärung erhalten, wobei sich die Hefe nach der Gärung am Boden des Gefäßes absetzt und dort getrennt werden kann. Bei obergärigem Bier handelt es sich um ein Bier, das durch Obergärung erhalten wird, wobei die Hefe am Ende der Gärung nach oben steigt und oben, soweit es möglich ist, abgetrennt wird.

In einer weiteren bevorzugten Ausführungsform der Erfindung ist vorgesehen, dass der Gärprozess unter Verwendung mindestens einer Hefe und mindestens eines Säurebildners ausgewählt aus der Gruppe bestehend aus Vertretern von Lactobacillus sp., Acetobacter sp. und Gluconobacter sp. durchgeführt wird. In einer bevorzugten Ausgestaltung dieser Ausführungsform ist beispielsweise vorgesehen, dass die Gärung unter Verwendung von S. cerevisiae und/oder S. diastaticus und/oder Schizosaccharomyces pombe und einem Lactobacillus-Vertreter durchgeführt wird. Lactobazillen, die auch als Milchsäurebakterien bekannt sind, sind zur Milchsäuregärung befähigt. Die aufgrund einer solchen Gärung hergestellten Biere beziehungsweise bierähnlichen Getränke zeichnen sich durch einen milden säuerlichen Geschmack aus, der etwa dem von Berliner Weiße entspricht.

In einer weiteren bevorzugten Ausgestaltung dieser Ausführungsform ist beispielsweise vorgesehen, dass die Gärung unter Verwen= dung von S. cerevisiae und/oder S. diastaticus und/oder Schizosaccharomyces pombe und einem Acetobacter-Vertreter durchgeführt wird. Die Gattung Acetobacter umfasst im engeren Sinn die Essigsäurebakterien, die durch Oxidation von Ethanol Essigsäure bilden können. Den hergestellten Bieren beziehungsweise bierähnlichen Getränken wird ein säuerlicher Geschmack verliehen, der sich deutlich von dem Geschmack der unter Verwendung von Lactobacillus erhaltenen Getränke unterscheidet.

In einer weiteren bevorzugten Ausgestaltung dieser Ausführungsform ist beispielsweise vorgesehen, dass die Gärung unter Verwendung von S. cerevisiae und/oder S. diastaticus und/oder Schizosaccharomyces pombe und einem Gluconobacter-Vertreter durchgeführt wird. Gluconobacter kann einerseits Ethanol zu Essigsäure und andererseits Glukose zu Gluconsäure oxidieren. Die durch diese Mischgärung hergestellten Bieren beziehungsweise bierähnlichen Getränke weisen ebenfalls einen angenehmen säuerlichen Geschmack auf.

Bevorzugt wird die Isomaltulose der Würze als Kohlenhydratkomponente vor der Hauptgärung zugesetzt, besonders bevorzugt bei der Zubereitung der Würze, in Form von Sirup, als Lösung oder als kristalliner Feststoff. In einer Variante wird Isomaltulose, vorzugsweise zusammen mit mindestens einer weiteren Kohlenhydratkomponente wie Malz oder/und unvermälztes Getreide, vor und zum Maischen zugegeben. In einer anderen Variante wird Isomaltulose am oder kurz vor Maischende zugegeben. In einer weiteren Variante wird I-somaltulose der geklärten Würze erst nach Abtrennen des Trebers zugegeben.

Durch die Verwendung der Isomaltulose bei der Bierherstellung wird ein Bier erhalten, das schon als Jungbier besonders arm an geschmacksbeeinträchtigenden Gärnebenprodukten ist. Gegenstand der Erfindung ist demgemäß auch ein mit dem erfindungsgemäßen Verfahren herstellbares Bier oder Biermischgetränk. Ein Gegenstand ist auch ein mittels des erfindungsgemäßen Verfahrens hergestelltes Diätbier, Malztrunk, Malzbier oder bierähnliches Erfrischungsgetränk.

Unter "Malztrunk" wird ein vor allem malzaromatisches, malzsüßes, schwach gehopftes, kohlensäurehaltiges und dunkles Getränk verstanden, das zudem alkoholarm bis alkoholfrei ist. Vorzugsweise wird der Malztrunk mit etwa 7-8 % Stammwürze aus dem Malzanteil eingebraut. Nach der Filtration wird mit bevorzugt süßenden Zuckern (Glukose, Saccharose) auf 12 % Stammwürze eingestellt (etwa ein Drittel der Stammwürze).

Ein Biermischgetränk kann zumindest das mit dem erfindungsgemäßen Verfahren herstellbare Bier und mindestens eine weitere Komponente, die ausgewählt ist aus Kräuterextrakten, Aromen, Koffein, Farbstoffen, Aminosäuren, Genusssäuren, Fruchtkomponenten wie Fruchtsaft, Fruchtmark, Fruchtpulpe oder Fruchtextrakte, Zucker, Zuckeraustauschstoffen wie Zuckeralkoholen, wie Intensivsüßstoffen, Wasser, Branntwein (Ethanol) und Limonadengrundstoff, enthalten.

Unter "Kräuterkomponenten" werden besonders verstanden: Extrakte, Lösungen, Auszüge oder Essenzen aus Pflanzenteilen, vorzugsweise von Anis, Baldrianwurzel, Brennnessel, Brombeerblättern, Erdbeerblättern, Fenchel, Frauenmantel, Gänsefingerkraut, Ginseng, Hagebutte, Hibiskusblüten, Himbeerblättern, Holunder, Hopfen, Ingwer, Johanniskraut, Kamille, Koriander, Krauseminze, Lapacho-Pflanze, Lavendel, Limonen-Gras, Majoran, Malve, Melisse, Mistel, Pfefferminze, Ringelblume, Rosmarin, Enzian, Schafgarbe, Thymian, Ysop, Zimt etc. Unter "Fruchtkomponenten" werden besonders verstanden: Fruchtextrakte, vorzugsweise aus Äpfeln, Bananen, Birnen, Ananas, Orangen, Grapefruit, Kirsche, Sauerkirsche, Limonen, Zitronen, Passionsfrüchten, Pfirsichen, Sanddorn, Himbeeren, Erdbeeren, Brombeeren, Johannisbeeren, Stachelbeeren, Kiwi-Früchten, etc.

Ein Biermischgetränk kann natürliche oder naturidentische Geruch- und/oder Geschmacksstoffe als Aromakomponente wie ätherische Öle aus Pflanzen oder Früchten wie Citrusöl, Pfefferminzöl oder Nelkenöl, Fruchtessenzen, Aroma gebende Fruchtsäfte, Anis, Menthol, Eukalyptus etc. enthalten.

Bei den Farbstoffkomponenten handelt es sich bevorzugt um Farbstoffe pflanzlicher Herkunft wie Carotinoide, Flavonoide oder Anthocyane, Farbstoffe tierischer Herkunft, anorganische Pigmente wie Eisenoxid-Pigmente, Produkte der enzymatischen und der nichtenzymatischen Bräunung, Erhitzungsprodukte wie Karamell, Zuckercouleur, oder synthetische Farbstoffe wie Azo-, Triphenylmethan-, Indigoid-, Xanthen- oder Chinolin-Verbindungen sein. Geeignete synthetische Farbstoffe sind beispielsweise Erythrosin, Indigo Camine oder Tartrazin, die zur Farbkorrektur und/oder zur Erzeugung eines ansprechenden Aussehens eines Biermischgetränkes eingesetzt werden.

Die Aminosäure-Komponenten sind bevorzugt Gemische essentieller Aminosäuren. Bevorzugte Aminosäuren sind His, Ile, Leu, Lys, Thr, Trp, Val und Taurin.

Die Säure-Komponenten sind bevorzugt Genusssäuren. Die erfindungsgemäßen Getränke liegen in einer bevorzugten Ausführungsform auch als Sprudelgetränke vor, das heißt sie können Kohlensäure/Kohlendioxid enthalten.

Biermischgetränke können auch Coffein-Komponenten wie Extrakte, Aufbereitungen oder Auszüge aus Kaffeebohnen, Teepflanze oder Teilen davon, Mate-Pflanze oder Teilen davon, Kolanuss, Kakaobohne oder Guarana enthalten.

Gemäß der Erfindung kann also der Diacetylgehalt im Jungbier durch den Einsatz bestimmter Mengen an Isomaltulose in der Würze beeinflusst werden. In der erfindungsgemäß vorgesehenen Menge beeinflusst der Isomaltuloseanteil den Geschmack des Bieres nicht. Gemäß der Erfindung kann die Isomaltulose bei gleich bleibender Hauptgärungsdauer auch dazu eingesetzt werden, den Restgehalt an Diacetyl zum Endpunkt der Hauptgärung einzustellen. Der Braumeister kann so bei gleich bleibender Verfahrensführung das Brauergebnis bezüglich der Bildung dieser Gärnebenprodukte steuern, einmal um den Gesamtdiacetylgehalt möglichst gering zu halten, aber auch um neue Geschmacksrichtungen im Bier zu erzeugen. Dies ist insbesondere vorteilhaft für die Bereitstellung neuartiger Biermischgetränke.

Ein Gegenstand der vorliegenden Erfindung ist daher auch die Verwendung von Isomaltulose zur Steuerung des Anteils an Gärnebenprodukten, insbesondere an vicinalen Diketonen, Diacetyl (2,3-Butandion), Pentandion, im Bier, wobei Isomaltulose als eine Kohlenhydratkomponente in der Würze zur Herstellung des Biers verwendet wird. Isomaltulose wird der Würze in dem erfindungsgemäß vorgesehenen Anteil zugegeben.

Ein weiterer Gegenstand ist schließlich auch die Verwendung von Isomaltulose zur Verkürzung der Gärdauer bei der Herstellung des Biers, wobei Isomaltulose als eine Kohlenhydratkomponente in der Würze zur Herstellung des Biers verwendet wird. Dabei wird die Gärdauer bei der Hauptgärung verkürzt, indem die Hauptgärung abgeschlossen wird, sobald der vergärbare Extraktanteil der Würze vergoren ist. Isomaltulose wird der Würze in dem erfindungsgemäß vorgesehenen Anteil zugegeben.

Der Gegenstand der Erfindung wird anhand der nachfolgenden Ausführungsbeispiele und den zugehörigen Figuren näher erläutert, wobei dieses nicht beschränkend zu verstehen sind.

Die Figuren zeigen:
Figur 1: Typischer Extaktverlauf bei der Hauptgärung bei bekannter Würze (Vergleichswürze), hergestellt aus 50 g Malz/400 ml ohne Isomaltulose (Extraktanteil etwa 9 %), und Isomaltulosehaltiger Würze (erfindungsgemäß), hergestellt aus 50 g Malz/400 ml und 3 g Isomaltulose (Extraktanteil: etwa 11 %); nach etwa 5 Tagen ist der Endpunkt der Vergärung des fermentierbaren Extrakts erreicht; der Extraktgehalt sinkt nicht weiter.
Figur 2: Typischer Verlauf des Diacetylgehalts bei der Hauptgärung unter Verwendung der Würzen gemäß Figur 1; bei der Isomaltulose-haltigen Würze (erfindungsgemäß) wird bereits zum Zeitpunkt der Endvergärung des Extrakts (Tag 5) der Geschmacksschwellenwert für Diacetyl unterschritten; das Jungbier steht der Nachgärung/Reifung früher zur Verfügung; bei der herkömmlichen Würze (Vergleichswürze) wird der Geschmacksschwellenwert erst nach etwa 7 Tagen unterschritten; die Hauptgärung ist um etwa 2 Tage verlängert.
Figur 3: Anteil der Aromakomponenten nach Vergärung von Realwürzen.
Figur 4: Bewertende Verkostung von Bieren aus Realwürzen.

### Beispiel 1: Vergärung von Isomaltulose-haltigen Würzen im Labormaßstab

### 1.1 Versuchsansätze

Es wurden Würzen nach dem Kongressverfahren (MEBAK) hergestellt. Jeder Ansatz basierte auf einem Volumen von 400 ml. Zur Herstellung der Kongresswürze wurde Malz (Malz A) fein geschrotet (Malzspalt: 0,2 mm) und auf 50 g eingewogen. Um den Einfluss des verwendeten Malzes abschätzen zu können, wurde ein weiterer Vergleichsansatz mit einem anderen Malz (im Folgenden: Malz B). Es wurden jeweils drei verschiedene Maischansätze hergestellt:
"Nullprobe": 50 g Malz in 400 mit Wasser
"3 g Palatinose": 50 g Malz + 3 g Isomaltulose in 400 ml Wasser
"6 g Palatinose": 50 g Malz + 6 g Isomaltulose in 400 ml Wasser

Zunächst wurden 250 ml temperiertes bidestilliertes Wasser je Becher zugegeben und unter Rühren mit 100 U/min wird 30 Minuten bei 45 °C gemaischt. Dann wurde mit 1 °C/min auf 70 °C hochgeheizt und 100 ml temperiertes bidest. Wasser wurden zugegeben. Diese Temperatur wurde 60 min gehalten. Nach dem Maischen wurde der Becherinhalt auf exakt 450 g mit bidest. Wasser aufgewogen (entspricht 50 g Malz + 400 ml Wasser).

Die Würzen wurden anschließend mittels Faltenfilter in einen Messzylinder filtriert, nachdem sie mit einem Glasstäbchen homogenisiert wurden. Die erhaltenen filtrierten Würzen wurden in Bügelflaschen übertragen und 16 min. bei 121 °C autoklaviert. Die Sterilwürzen wurden bis zur weiteren Verwendung kalt (bei etwa 4 °C) gelagert.

Es ergeben sich pro Ansatz nach Abtrennung des Trebers durch Filtration jeweils etwa 380 ml Würze mit den folgenden gemittelten Extraktgehalten:
"Nullprobe": 9,2 %
"3 g Palatinose": 9,8 %
"6 g Palatinose": 10,5 %

### 1.2 Anstellen

Zur Vergärung der mit Malz A hergestellten Würzen wurden 5 verschiedene Hefen herangezogen (drei untergärige, zwei obergärige), die als "normale" Brauereihefen zu betrachten sind:
S. carlsbergensis MJJ11
S. carlsbergensis MJJ10
S. carlsbergensis MJJ42
S. cerevisiae MJJ 15
S. cerevisiae MJJ18

Den Würzen werden jeweils 3 ml der jeweiligen Hefereinzuchtsuspension (etwa 30 bis 40 Millionen Zellen/ml) zugegeben.

Die mit Malz B hergestellten Würzeansätze wurden nach demselben Schema unter Verwendung von S. carlsbergensis MJJ11 vergoren.

### 1.3 Hauptgärung

Die Hauptgärung findet in allen Ansätzen statt für 7 Tage in offenen Gefäßen bei 26 °C unter Lichtabschluss. Im Verlauf der Gärung wurden Proben gezogen, um den Extraktverlauf zu ermitteln. Dazu wurden die Proben vor der Extraktmessung einer erneuten Filtration unterzogen, um eventuell gebildete Trübstoffe zu entfernen. Die Bestimmung des Diacetylgehalts in den Proben erfolgte nach der photometrischen Methode der MEBAK. Die Extrakt- und Alkoholmessung erfolgte mit dem Gerät Alcolyzer^{®} (Firma Anton Paar GmbH).

### 1.4 Ergebnisse

Tabelle 1 zeigt die gebildeten Diacetylmengen nach Vergärung der aus Malz A hergestellten Würzen [ppm]

**Tabelle 1:**

| Hefe | Nullprobe | 3 g Palatinose | 6 g Palatinose |
|---|---|---|---|
| MJJ 10 | 0,09 | 0,04 | 0,09 |
| MJJ 11 | 0,09 | 0,07 | 0,07 |
| MJJ 42 | 0,07 | 0,05 | 0,08 |
| MJJ 15 | 0,13 | 0,1 | 0,14 |
| MJJ 18 | 0,05 | 0,03 | 0,05 |

Tabelle 2 zeigt die gebildeten Diacetylmengen nach Vergärung der aus Malz B hergestellten Würze [ppm]

**Tabelle 2:**

| Hefe | Nullprobe | 3 g Palatinose | 6 g Palatinose |
|---|---|---|---|
| MJJ11 Malz B | 0,19 | 0,12 | 0,14 |

Tabelle 3 zeigt die Mittelwerte der gebildeten Diacetylmengen am Endpunkt der Extraktvergärung (alle Ansätze) [ppm]

**Tabelle 3:**

| Nullprobe | 3 g Pälatinose | 6 g Palatinose |
|---|---|---|
| 0,10 | 0,07 | 0,10 |

Bei Zugabe von 3 g Isomaltulose zur Würze liegen die gebildeten Diacetylmengen deutlich unter denen der Nullproben. Dies gilt ausnahrnslos für alle betrachteten Ansätze. Im Mittel wird eine Abnahme um 30 %. erreicht.

Die Zugabe von 6 g Isomaltulose zur Würze bewirkt keine einheitliche Verringerung der Diacetylmengen. Im Mittel ergibt sich bei der Zugabe von 6 g Isomaltulose der gleiche Diacetylgehalt wie in den Nullproben.

Der beschriebene Effekt scheint vom verwendeten Malz unabhängig zu sein, da ebenfalls bei Verwendung von Malz B in Gegenwart von 3 g Isomaltulose ein deutlich verringerter Diacetylgehalt gemessen wurde, bei Zugabe von 6 g Isomaltulose ebenfalls nur ein leicht verringerter Wert.

Ebenso ist der Effekt unabhängig davon, ob unter- oder obergärige Hefen verwendet werden, die beobachteten Effekte sind bei allen betrachteten Hefen aufgetreten..

Bei der Vergärung von Würzen im Labormaßstab ergab sich also, dass in den betrachteten Ansätzen der Zugabe einer geringen Menge Isomaltulose (3 g/ 400 ml) deutlich weniger Diacetyl gebildet wurde als in den Vergleichsansätzen, die keine Isomaltulose enthielten. Dieser Effekt wurde bei allen untersuchten Hefen (drei untergärige, zwei obergärige) festgestellt und ist vom verwendeten Malz unabhängig.

### Beispiel 2: Vergärung Isömaltulose-haltiger Würzen im Technikumsmaßstab

In einer Technikumsbrauerei wurden zwei verschiedene Biere hergestellt:
- "Diätbier": Bier, bei dem im fertigen Produkt idealerweise nur noch Isomaltulose als Kohlenhydrat vorliegt.
- "Alkoholreduziertes Bier": Bier, bei dem Teile der Stammwürze durch Isomaltulose substituiert sind, sodass bei herkömmlicher Vergärung und Verfahrensführung weniger Alkohol entsteht.

Die Biere wurden in offenen Gärbottichen bei etwa 12 °C vergoren und danach entsprechend weiterverarbeitet. Die Gärung wurde als beendet betrachtet, wenn der Extraktgehalt über die Gärdauer nicht mehr abnahm (Endpunkt der Extraktgärung). Die Analytik der gebildeten Diacetylmengen erfolgte nach der photometrischen Methode der MEBAK. Die Kohlenhydratgehalte in der Würzen entsprachen denjenigen gemäß Beispiel 1.

### 2.2 Ergebnisse

In Tabelle 4 sind die Analysenwerte der jeweils hergestellten Würzen mit und ohne Isomaltulose dargestellt.

**Tabelle 4:**

| | | **Bier, alkoholreduziert** | **Bier, alkoholreduziert** | | **Diätbier** |
|---|---|---|---|---|---|
| **Würze** | | | **+ Isomaltulose** | **Diätbier** | **+ Isomaltulose** |
| Extraktgehalt | Gew-% | 7,15 | 11,48 | 7,47 | 11,55 |
| Extrakt, scheinbar, endvergoren | Gew-% | 1,65 | 5,10 | 0,30 | 4,10 |
| Endvergärunggrad, scheinbar | % | 77,40 | 56,70 | 96,10 | 65,60 |
| pH | | 6,00 | 5,70 | 5,86 | 5,76 |
| Farbentiefe | EBC | 4,60 | 5,20 | 5,70 | 5,90 |
| Bittereinheiten | BE | 45,30 | 44,90 | 31,20 | 33,00 |
| Freier Aminostickstoff | ppm | 114 | 115 | 126 | 122 |
| Diacetyl-Gehalt am Endpunkt der Extraktgärung | ppm | 0,36 | 0,13 | 0,13 | 0,10 |

Deutlich ist der Unterschied zu erkennen, den die Isomaltulosezugabe in den Extraktgehalten vor und nach Endvergärung bewirkt. Davon abgesehen sind die Analysenwerte im Rahmen der Messgenauigkeit unverändert. Ausgenommen ist hiervon der pH-Wert. Wie in vorangegangenen Versuchsreihen wird dieser durch die Isomaltulosezugabe leicht erniedrigt. Bedingt durch den geringen Gerstenmalzanteil sind die Werte für den freien Aminostickstoff in allen Würzen recht niedrig.

Es wurde gefunden, dass sowohl der Maximalwert der gebildeten Diacetylmenge, als auch die Menge an Diacetyl am letzten Tag der Gärung in der isomaltulosefreien Vergleichswürze zum Teil deutlich höher lag als in der Würze, der Isomaltulose zugegeben wurde.

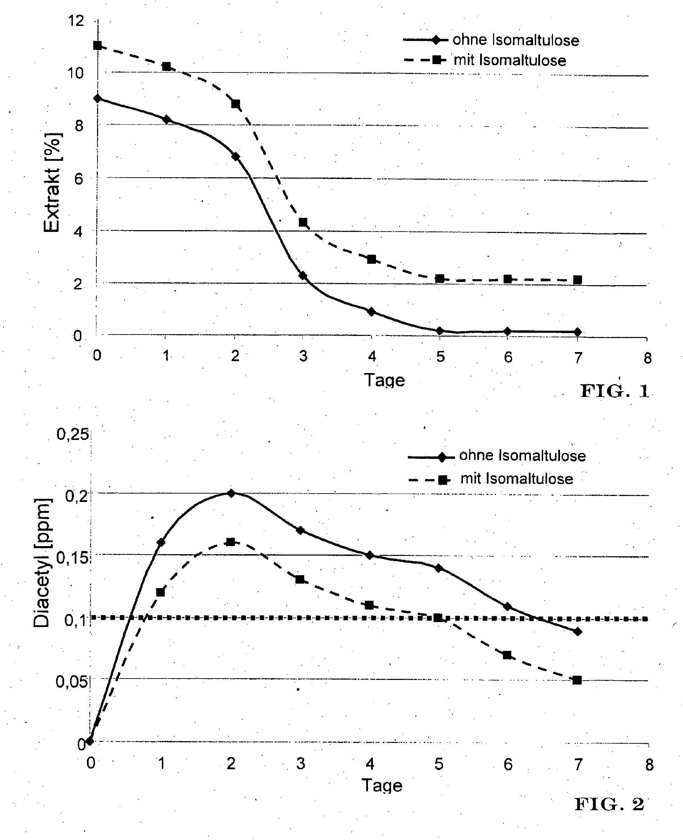

Die Figuren 1 und 2 zeigen den typischen Fermentationsverlauf bei der Hauptgärung der Bierherstellung. Erwartungsgemäß zeigt der Isomaltulose-haltige Ansatz einen höheren Extraktgehalt. Bei beiden Würzen, Isomaltulose-haltige Würze und Würze ohne Isomaltulose reicht der Extraktgehalt am Tag 5 einen stabilen Wert; das heißt ab diesem Zeitpunkt ist die Vergärung des vergärbaren Extrakts abgeschlossen (Endpunkt de Extraktvergärung). Figur 2 zeigt, dass zum Endpunkt der Extraktvergärung bei Verwendung der Isomaltulosehaltigen Würze der Geschmacksschwellenwert von 0,1 ppm bereits unterschritten wird. Das erhaltene Jungbier ist bereits zu diesem frühen Zeitpunkt für die Weiterverarbeitung verfügbar. In dem Vergleichsansatz ohne Isomaltulose muss die Hauptgärung für einen Zeitraum von 1 bis 2 Tagen weitergeführt werden, um den Geschmacksschwellenwert zu unterschreiten. Dementsprechend verzögert sich die Weiterverarbeitung des Jungbiers. Gleichzeitig bleibt der Hauptgärbottich für diesen Zeitraum für einen neuen Gäransatz blockiert.

### Beispiel 3: Einfluss der Isomaltulose auf das Aromaprofil von fermentierten Realwürzen

Um den Einfluss der Isomaltulose auf das Aroma von Bieren abschätzen zu können, wurde Isomaltulose in einem deutlich über dem erfindungsgemäß vorgesehenen Anteil liegenden Anteil der Würze als Kohlenhydratkömponente zugegeben.

### 3.1 Realwürzen

Es wurde eine konventionelle Pilsener Würze hergestellt. Ein Teil dieser Würze wurde so behandelt, dass etwa ein Viertel des Extraktes aus Isomaltulose bestand. Die unbehandelte Originalwürze und die isomaltulosehaltige Würze wurden unter den gleichen Bedingungen (drucklos, 12 °C) von den gleichen Hefen, wie bei den Modellwürzen verwendet, vergoren.

Die Würzen wurden bis etwa 1 bis 1,5 % über dem zu erwartenden Extrakt bei Endvergärung geführt, danach wurde bei 1 °C eine 14-tägige Nachgärung angeschlossen. Die so hergestellten Biere wurden bierspezifisch nach MEBAK sowie gaschromatographisch auf die gleichen ausgewählten Aromakomponenten wie die Modellwürzen analysiert. Zusätzlich wurden bewertende Verkostungen durchgeführt. Die Veränderung des analytisch festgestellten Aromaprofils und des Geschmackseindrucks abhängig vom Isomaltulosegehalt sollte festgestellt werden.

In Tabelle 5 sind die Würzeanalysen dargestellt.

**Tabelle 5:**

| Würzeanalysen, mit und ohne Isomaltulose | | | |
|---|---|---|---|
| **Parameter** | | **Würze** | **Würze + 25% Isomaltulose** |
| Extraktgehalt | % | 11,26 | 11,33 |
| Extrakt, scheinbar, endvergoren | % | 1,93 | 4,2 |
| Endvergärungsgrad, scheinbar | % | 83,3 | 62,6 |
| pH | | 5,36 | 5,2 |
| Farbentiefe | EBC | 8,6 | 6,4 |
| Bittereinheiten | BE | 48,1 | 31,6 |
| Gesamtstickstoff | ppm | 969 | 655 |
| Freier Aminostickstoff | ppm | 175 | 124 |
| Zink | ppm | 0,17 | 0,15 |
| DMS/Dimethylsulfid | ppm | 30 | 20 |

Die Würzen wurden auf einen sehr ähnlichen Extraktgehalt eingestellt. Die Zugabe der Isomaltulose bewirkt, dass der Vergärungsgrad sinkt, da durch die Substitution von würzeeigenem Extrakt durch Isomaltulose der Anteil nicht vergärbarer (in der Endvergärungsgradanalytik) Kohlenhydrate steigt. Die weiteren Analysenwerte verändern sich entsprechend der Rückverdünnung, das heißt Gehalt, wie Bitterstoffe oder Eiweißfraktionen, sinken.

Beide Würzen wurden mit jeweils den folgenden vier Hefen vergoren:
- Saccharomyces carlsbergensis MJJ 11,
- Saccharomyces cerevisiae MJJ 25,
- Saccharomyces cerevisiae MJJ 2,
- Schizosaccharomyces pombe

### 3.2 Analyse der Aromakomponenten

In allen Ansätzen wurde nach Beendigung der Gärung (=4 Tage keine Extraktabnahme) folgende Aromakomponenten bestimmt:
Acetaldehyd, Ethylacetat, 1-Propanol, Isobutanol, Iso-Anylacetat, 2-Methylbutanol, 3-Methylbutanol, 2-Phenylethanol, Phenylacetat.

Neben den relevanten Aromakomponenten wurden auch die während der Gärung entstandenen vicinalen Diketone erfasst.

### 3.3 Ergebnisse

### 3.3.1 Analyse

Tabelle 6 zeigt die Analysenwerte der mit Saccharomyces carlsbergensis MJJ 11 und Saccharomyces cerevisiae MJJ 25 vergorenen Würzen (mit und ohne Isomaltulose).

Tabelle 7 zeigt die Analysenwerte der mit Schizosaccharomyces pombe und Saccharomyces cerevisiae MJJ 2 vergorenen Würzen (mit und ohne Isomaltulose)

**Tabelle 6:**

| | **MJJ 11** | **MJJ 11 mit Isomaltulose** | **MJJ 25** | **MJJ 25 mit Isomaltulose** |
|---|---|---|---|---|
| Stammwürze, errechnet [%] | 11,25 | 11,24 | 11,32 | 11,28 |
| Extrakt, scheinbar [%] | 2,35 | 3,68 | 3,3 | 4,16 |
| Extrakt, wirklich [%] | 4,04 | 5,1 | 4,82 | 5,44 |
| Alkohol [Vol.-%] | 4,71 | 3,98 | 4,28 | 3,59 |
| pH | 4,4 | 4,25 | 4,67 | 4,4 |
| Bittereinheiten [BE] | 30 | 27 | 33 | 29 |
| Schaumhaltbarkeit [s] | 276 | 263 | 343 | 281 |

**Tabelle 7:**

| | **S. pombe** | **S. pombe mit Isomaltulose** | **MJJ 2** | **MJJ 2 mit Isomaltulose** |
|---|---|---|---|---|
| Stammwürze, errechnet [%] | 11,27 | 11,32 | 11,28 | 11,56 |
| Extrakt, scheinbar [%] | 2,41 | 4,21 | 2,13 | 4,58 |
| Extrakt, wirklich [%] | 4,08 | 5,5 | 3,87 | 5,91 |
| Alkohol [Vol.-%] | 4,67 | 3,64 | 4,86 | 3,75 |
| pH | 4,38 | 4,36 | 4,45 | 4,36 |
| Bittereinheiten [BE] | 33 | 26 | 29 | 25 |
| Schaumhaltbarkeit [s] | 276 | 197 | 228 | 256 |

Zu erkennen ist der bei den mit dem hohen Anteil an Isomaltulose versetzten Bieren auftretende höhere Restextrakt nach der Vergärung, da die Isomaltulose nicht vergoren wurde. Daraus resultiert in allen Fällen auch ein niedrigerer Alkoholgehalt. Dies gilt auch für Schizosaccharomyces pombe, die in den Modellwürzen die isomaltulosehaltigen Lösungen ähnlich gut verwerten konnte wie die Referenzlösung. In komplexen Mischkohlenhydratlösungen werden offensichtlich auch von dieser Hefe zuerst andere Zucker zuerst verwertet. Bevor die Isomaltulose in der zugegebenen hohen Konzentration vollständig abgebaut werden konnte, ist in dieser Versuchsreihe die Vergärung beendet worden. Der pH-Wert der isomaltulosehaltigen Biere ist durchgängig leicht niedriger als die der Vergleichsbiere, das gleiche gilt auch für die Bittereinheiten, allerdings ist hier der niedrigere Wert durch die Rückverdünnung zu begründen.

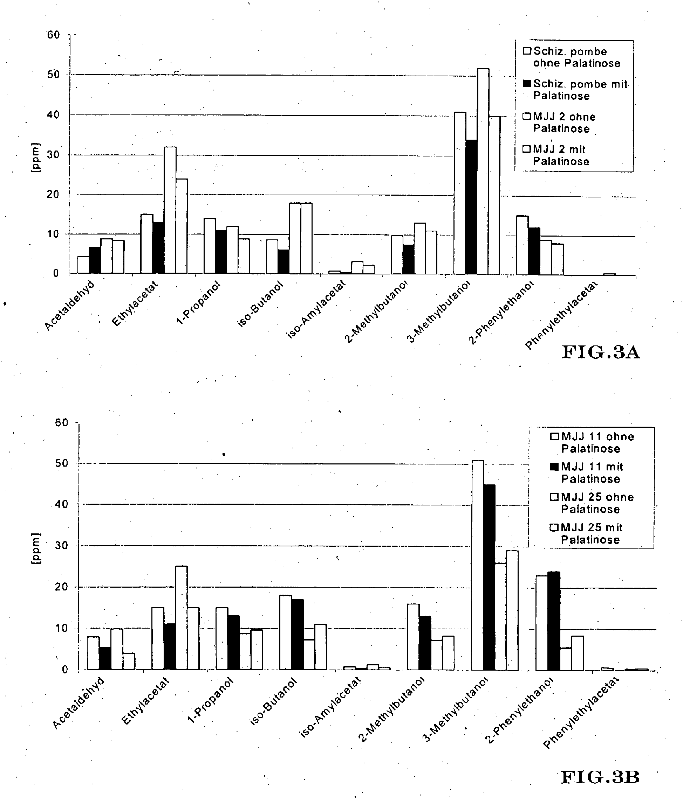

Figur 3a zeigt den Gehalt an Aromakomponenten nach Vergärung der Realwürzen durch Saccharomyces carlsbergensis MJJ 11 und Saccharomyces cerevisiae MJJ 25. Es ist kein konsistenter Einfluss des Isomaltulosezusatzes auf die Aromakomponentenbildung zu erkennen. Zwar bildete MJJ 11 bei fast allen Komponenten im Ansatz ohne Isomaltulose größeren Mengen der jeweiligen Substanz, jedoch sind die Unterschiede nur gering und zudem sind sie vermutlich der absolut etwas geringeren Menge an verwertetem Substrat geschuldet. weiterhin ist festzustellen, dass Saccharomyces cerevisiae MJJ 25 in einigen Fällen in der isomaltulosehaltigen Lösung höhere Konzentrationen der betreffenden Substanz bildete. Anhand der hier dargestellten Daten kann nicht eindeutig gesagt werden, dass das Vorhandensein der Isomaltulose einen Einfluss auf das gebildete Aromaprofil hat.

Figur 3b zeigt den Gehalt an Aromakomponenten nach Vergärung der Realwürzen durch Schizosaccharomyces pombe und Saccharomyces cerevisiae MJJ 2. Es ist ebenfalls kein konsistenter Einfluss des Isomaltulosezusatzes auf die Aromakomponentenbildung zu erkennen. In den meisten Fällen zwar wird weniger von den betrachteten Substanzen in den Würzen mit Isomaltulosezusatz gebildet, bedingt jedoch auch durch die insgesamt weniger verwertete Menge Substrat. Bemerkenswerter Weise bildete Schizosaccharomyces pombe bei Vorhandensein von Isomaltulose wieder etwas mehr Acetaldehyd.

Das Vorhandensein von Isomaltulose hat auf die Entwicklung von Substanzen aus der Gruppe der Ester und höheren aliphatischen Alkohole (und Acetaldehyd) keinen nennenswerten Einfluss. Ausnahme ist hier die Hefe Schizosaccharomyces pombe, die offensichtlich mehr Acetaldehyd bildet, wenn ein großer Anteil Isomaltulose im Substrat vorhanden ist.

### 3.3.2 Verkostung

Die Biere wurden nach beendeter Haupt- und Nachgärung bewertend verkostet. Jeweils auf einer Skala von 1 bis 5 wurden folgende Parameter bewertet: Süßeindruck, Bittereindruck, Hopfenaroma, Malzigkeit, Fruchtigkeit, Rezenz, Vollmundigkeit und Gesamteindruck.

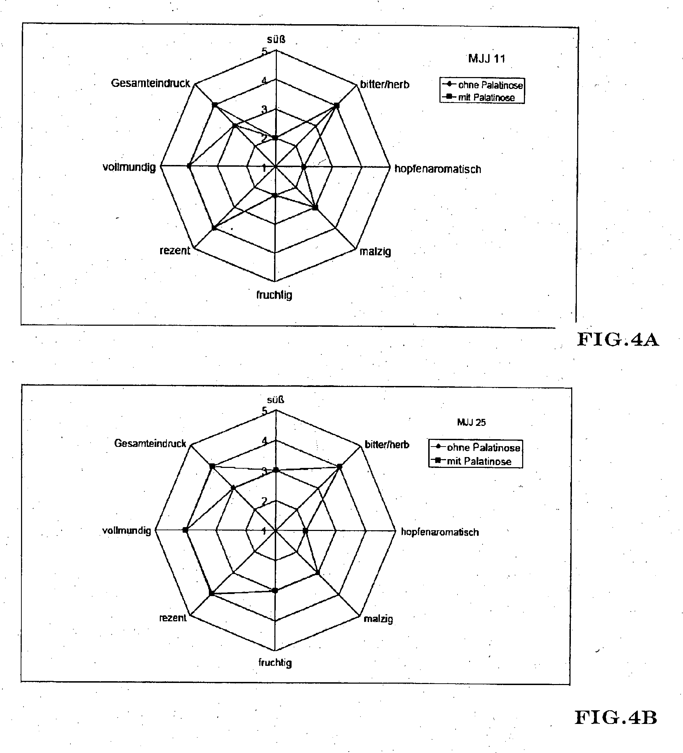

Figur 4a zeigt die Ergebnisse der bewertenden Verkostung der Biere aus den Realwürzen; vergoren mit Saccharomyces carlsbergensis MJJ 11 (10 Verkoster): Die sich durch das Verkostungsschema ergebenden Aromaprofile liegen nach Vergärung durch Saccharomyces carlsbergensis MJJ 11 nahezu identisch übereinander, unabhängig davon ob Isomaltulose in der Würze enthalten war oder nicht. Lediglich im Gesamteindruck wurde das Isomaltulose-Bier etwas besser bewertet Ein häufig genannter Grund war ein "runderer" Geschmackseindruck, obwohl die einzelnen Parameter gleich bewertet wurden.

Figur 4b zeigt die Ergebnisse der bewertenden Verkostung der Biere aus den Realwürzen; vergoren mit Saccharomyces cerevisiae MJJ 25 (10 Verkoster): Auch nach Vergärung mit Saccharomyces cerevisiae MJJ 25 liegen die Aromaprofile nahezu identisch übereinander. Wieder ist das isomaltulosehaltige Bier in der Gesamtbenotung leicht besser beurteilt worden, obwohl die einzelnen Parameter gleich bewertet wurden. Nach Vergärung mit Saccharomyces cerevisiae MJJ 25 wurden allerdings sowohl der Bittereindruck als auch die Fruchtigkeit der Biere stärker wahrgenommen.

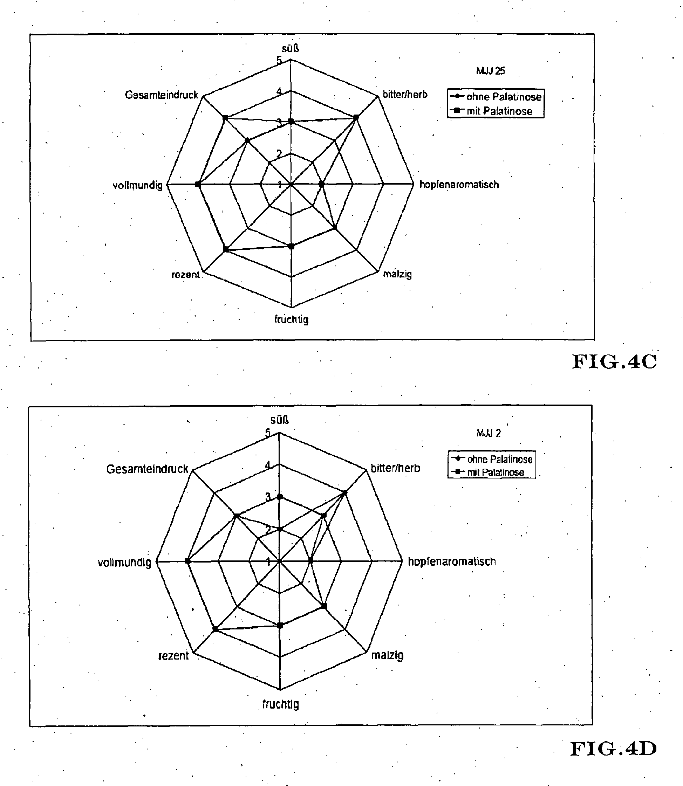

Figur 4c zeigt die Ergebnisse der bewertenden Verkostung der Biere aus den Realwürzen; vergoren mit Saccharomyces cerevisiae MJJ 2 (10 Verkoster): Nach Vergärung mit Saccharomyces cerevisiae MJJ 2 sind die Biere wiederum recht ähnlich bewertet worden. Das Bier ohne Isomaltulose wurde als weniger süß wahrgenommen, dafür trat jedoch der Eindruck der Bittere stärker in den Vordergrund, wurde auf der anderen Seite vom Vorhandensein der Isomaltulose offensichtlich etwas kompensiert. In der Gesamtqualität sind beide Biere gleich bewertet worden.

Figur 4d zeigt die Ergebnisse der bewertenden Verrostung der Biere aus den Realwürzen; vergoren mit Schizosaccharomyces pombe (10 Verkoster): Nach der Vergärung durch Schizosaccharomyces pombe unterschieden sich die Biere offenbar deutlich. Das isomaltulosehaltige Bier wurde als süßer empfunden, offenbar diese Süße jedoch als malzig wahrgenommen. Obwohl die Intensität der Bittere gleich stark empfunden wurde, ist bei dem Bier ohne Isomaltulose diese Bittere als etwas hopfenaromatischer wahrgenommen worden, ein Eindruck, der von der enthaltenen Isomaltulose offensichtlich kompensiert wurde. Bei der Bewertung der Gesamtqualität erhielt jedoch das isomaltulosehaltige Bier wiederum die leicht bessere Bewertung.

Die isomaltulösehaltigen Biere wurden in der Mehrzahl nicht als deutlich unterschiedlich zu den Referenzbieren wahrgenommen. In der Gesamtqualität kann die Zugabe den Eindruck des Bieres durch Kompensierung von störenden Geschmackseinflüssen, wie z. B. kräftiger Bittere, etwas "runder" erscheinen lassen.

## Patentansprüche

1. Verfahren zur Herstellung von Bier aus Brauwasser, gegebenenfalls Hopfen und einer Kohlenhydratkomponente, enthaltend die Schritte:
a) Bereitstellen einer Würze aus Brauwasser, gegebenenfalls Hopfen und der Kohlenhydratkomponente und
b) mikrobielles Vergären der Würze in
b1) Hauptgärung, wobei Jungbier erhalten wird,
b2) Zurückkühlen des Jungbieres und Nachgärung/Reifung,
**dadurch gekennzeichnet, dass** die Kohlenhydratkomponente Isomaltulose oder ein Isomaltulose-haltiges Gemisch mit einem Anteil von 0,3 g/100 ml bis 3 g/100 ml Isomaltulose der Würze enthält und die Hauptgärung (Schritt b1)) abgeschlossen und die Nachgärung (Schritt b2)) begonnen wird, sobald der Endpunkt der Extraktgärung erreicht ist, dadurch erkennbar, dass der Extraktanteil im Verlauf der Hauptgärung nicht mehr weiter abnimmt.

2. Verfahren nach Anspruch 1, wobei die Kohlenhydratkomponente vermälztes Getreide und/oder Getreide-Rohfrucht enthält.

3. Verfahren nach einem der vorhergehenden Ansprüche, wobei Isomaltulose in der Würze in einem Anteil von 0,3 g/100 ml bis 2 g/100 ml enthalten ist.

4. Verfahren nach einem der vorhergehenden Ansprüche, wobei Isomaltulose in der Würze in einem Anteil von 0,5 g/100 ml bis 1,5 g/100 ml enthalten ist.

5. Verfahren nach einem der vorhergehenden Ansprüche, wobei Isomaltulose in der Kohlenhydratkomponente der Würze in einem Verhältnis der übrigen Bestandteile der Kohlenhydratkomponente zu Isomaltulose von 20:1 bis 8:1 enthalten ist.

6. Verfahren nach einem der vorhergehenden Ansprüche, wobei die Isomaltulose der Kohlenhydratkomponente als Sirup, in Lösung oder als kristalliner Feststoff zugesetzt wird.

7. Verwendung von Isomaltulose als eine Kohlenhydratkomponente in einer Würze zur Herstellung von Bier zur Steuerung des Anteils an Gärnebenprodukten im Bier.

8. Verwendung nach Anspruch 7, wobei die Gärnebenprodukte vicinale Diketone, Diacetyl (2,3-Butandion), Pentandion, sind.

9. Verwendung von Isomaltulose als eine Kohlenhydratkomponente in einer Würze zur Herstellung von Bier zur Verkürzung der Gärdauer bei der Herstellung des Biers.

10. Verwendung nach Anspruch 9, wobei die Gärdauer bei der Hauptgärung verkürzt wird, indem die Hauptgärung abgeschlossen wird, sobald der vergärbare Extraktanteil der Würze vergoren ist.

11. Verwendung nach einem der Ansprüche 7 bis 10, wobei Isomaltulose in der Würze in einem Anteil von 0,3 g/100 ml bis 2 g/100 ml enthalten ist.

12. Verwendung nach einem der Ansprüche 7 bis 11, wobei Isomaltulose in der Würze in einem Anteil von 0,5 g/100 ml bis 1,5 g/100 ml enthalten ist.

13. Verwendung nach einem der Ansprüche 7 bis 12, wobei Isomaltulose in der Kohlenhydratkomponente der Würze in einem Verhältnis der übrigen Bestandteile der Kohlenhydratkomponente zu Isomaltulose von 20:1 bis 8:1 enthalten ist.

## Claims

1. Process for the production of beer from brewing liquor, if necessary hops and a carbohydrate component, containing the steps:
a) providing a wort from brewing liquor, if necessary hops and the carbohydrate component and
b) microbially attenuating the wort during
b1) main fermentation, wherein young beer is obtained, and
b2) cooling of the young beer and secondary fermentation//matu ration,
**characterised in that** the carbohydrate component contains isomaltulose or an isomaltulose-containing mixture with a proportion of isomaltulose of the wort of 0.3 g/100 ml to 3 g/100 ml and the main fermentation (step b1)) is terminated and secondary fermentation (step b2)) is started as soon as the end point of extract attenuation is reached, which can be recognized by the portion of the extract not decreasing any further during the course of main fermentation.

2. Process according to claim 1, wherein the carbohydrate component contains malted grain and/or raw grain.

3. Process according to one of the preceding claims, wherein isomaltulose is contained in the wort in a proportion of 0.3 g/100 ml to 2 g/100 ml.

4. Process according to one of the preceding claims, wherein isomaltulose being contained in the wort in a proportion of 0.5 g/100 ml to 1.5 g/100 ml.

5. Process according to one of the preceding claims, wherein isomaltulose is contained in the carbohydrate component of the wort in a proportion of the remaining components of the carbohydrate component to isomaltulose of from 20:1 to 8:1.

6. Process according to one of the preceding claims, wherein the isomaltulose of the carbohydrate component is added as a syrup, in solution or as a crystalline solid.

7. Use of isomaltulose as a carbohydrate component in a wort for the production of beer for controlling the proportion of secondary fermentation products in the beer.

8. Use according to claim 7, wherein the secondary fermentation products are vicinal diketones, diacetyl (2,3-butanedione), pentane dione.

9. Use of isomaltulose as a carbohydrate component in a wort for the production of beer for shortening the fermentation period during the production of the beer.

10. Use according to claim 9, wherein the fermentation period is shortened during main fermentation by the main fermentation being terminated as soon as the attenuable portion of the extract of the wort has been attenuated.

11. Use according to one of claims 7 to 10, wherein isomaltulose is contained in the wort in a proportion of 0.3 g/100 ml to 2 g/100 ml.

12. Use according to one of claims 7 to 11, wherein isomaltulose is contained in the wort in a proportion of 0.5 g/100 ml to 1.5 g/100 ml.

13. Use according to one of claims 7 to 12, wherein isomaltulose is contained in the carbohydrate component of the wort in a ratio of the remaining components of the carbohydrate component to isomaltulose of 20:1 to 8:1.

## Revendications

1. Procédé pour la fabrication de bière à partir de l'eau de brassage, le cas échéant de houblon et d'un composant de glucide, le procédé contenant les étapes suivantes :
a) fournissage d'un moût à partir de l'eau de brassage, le cas échéant de houblon et du composant de glucide, et
b) fermentation microbienne du moût dans
b1) la fermentation principale en obtenant de la bière verte,
b2) refroidissement de la bière verte et fermentation complémentaire / maturation,
**caractérisé en ce que** le composant de glucide contient de l'isomaltulose ou un mélange contenant de l'isomaltulose, avec une proportion de l'isomaltulose de 0,3 g/100 ml à 3 g/100 ml du moût, et la fermentation principale (étape b1)) est finie et la fermentation complémentaire (étape b2)) est commencée une fois un point final de la fermentation d'extrait est atteint, reconnaissable par le fait que la proportion d'extrait ne régresse plus au cours de la fermentation principale.

2. Procédé selon la revendication 1, dans lequel le composant de glucide contient des grains maltés et/ou grains crus.

3. Procédé selon l'une quelconque des revendications précédentes, dans lequel l'isomaltulose est contenu dans le moût dans une proportion de 0,3 g/100 ml à 2 g/100 ml.

4. Procédé selon l'une quelconque des revendications précédentes, dans lequel l'isomaltulose est contenu dans le moût dans une proportion de 0,5 g/100 ml à 1,5 g/100 ml.

5. Procédé selon l'une quelconque des revendications précédentes, dans lequel l'isomaltulose est contenu dans le composant de glucide du moût dans une proportion des autres composants du composant de glucide par rapport à l'isomaltulose de 20 : 1 à 8 : 1.

6. Procédé selon l'une quelconque des revendications précédentes, dans lequel l'isomaltulose est ajouté au composant de glucide sous forme de sirop, en solution ou sous forme de matière solide cristalline.

7. Utilisation de l'isomaltulose en tant que composant de glucide dans un moût pour la fabrication de bière, afin de contrôler la proportion des sous-produits de la fermentation dans la bière.

8. Utilisation selon la revendication 7, dans laquelle les sous-produits de la fermentation sont les dicétones vicinales, diacétyle (butane-2,3-dione), pentanedione.

9. Utilisation de l'isomaltulose en tant que composant de glucide dans un moût pour la fabrication de bière, afin de réduire la durée de la fermentation dans la fabrication de bière.

10. Utilisation selon la revendication 9, dans laquelle la durée de la fermentation dans la fermentation principale est réduite en finissant la fermentation principale une fois la proportion fermentescible de l'extrait dans le moût est fermentée.

11. Utilisation selon l'une quelconque des revendications 7 à 10, dans laquelle l'isomaltulose est contenu dans le moût dans une proportion de 0,3 g/100 ml à 2 g/100 ml.

12. Utilisation selon l'une quelconque des revendications 7 à 11, dans laquelle l'isomaltulose est contenu dans le moût dans une proportion de 0,5 g/100 ml à 1,5 g/100 ml.

13. Utilisation selon l'une quelconque des revendications 7 à 12, dans laquelle l'isomaltulose est contenu dans le composant de glucide du moût dans une proportion des autres composants du composant de glucide par rapport à l'isomaltulose de 20 : 1 à 8 : 1.
